# EUROPÄISCHE PATENTSCHRIFT

(11) **EP 0 856 679 B1**
(45) Veröffentlichungstag und Bekanntmachung des Hinweises auf die Patenterteilung: **23.05.2001**
(21) Anmeldenummer: 98101746.0
(22) Anmeldetag: 02.02.1998
(51) Int. Cl.: F16D 65/12

(54) **Kopplungsvorrichtung zur Kopplung einer Nabe mit einer Bremsscheibe**
Coupling device for connecting a hub to a brake disc
Dispositif de couplage connectant un moyeu avec un disque de frein

(30) Priorität: 03.02.1997 DE 29701826 U
(43) Veröffentlichungstag der Anmeldung: 05.08.1998
(73) Patentinhaber: WABCO Perrot Bremsen GmbH, 68229 Mannheim (DE)
(72) Erfinder: Antony, Paul, Dipl.-Ing, 67550 Worms (DE)
(74) Vertreter: Patentanwälte Leinweber & Zimmermann

(56) Entgegenhaltungen:
- DD-A- 143 810
- DE-A- 3 446 437
- DE-U- 9 421 426
- FR-A- 2 539 198
- GB-A- 2 009 367
- US-A- 3 495 689
- US-A- 4 299 425

## Beschreibung

Die Erfindung betrifft zum einen eine Vorrichtung zur drehfesten Kopplung einer an einer Achse gehaltenen Nabe mit der Bremsscheibe einer Scheibenbremse, wobei die Bremsscheibe auf der dem freien Ende der Achse abgewandten Seite der Nabe liegt, mit mindestens einem ersten Koppelelement, das sich durch eine Durchgangsöffnung in der Nabe erstreckt.

Kopplungsvorrichtungen der eingangs genannten Art sind bekannt, beispielsweise aus der EP-A-703 130, die der DE-A-44 33 743 entspricht. Bei den bekannten Kopplungsvorrichtungen dienen sogenannte Befestigungsschrauben dazu, einen flanschartigen Abschnitt an der Bremsscheibe mit einem flanschartigen Abschnitt an der Nabe zu koppeln. Die genannten Befestigungsschrauben sind dabei mit Abstand voneinander über den gesamten Umfang der beiden Flansche angeordnet.

Sollen Wartungsarbeiten an der Scheibenbremse durchgeführt werden, ist es häufig notwendig, die Nabe zu demontieren, um freien Zugang zu der Scheibenbremse zu haben. Zur Demontage der Nabe ist es aber wiederum erforderlich, die Kopplung zwischen der Bremsscheibe und der Nabe zu lösen, was bisher nur durch Lösen zahlreicher Befestigungsschrauben möglich war und daher vereinfacht werden sollte. Insbesondere sollte die Kopplung zwischen der Nabe und der Bremsscheibe auch dann auf einfache Weise gelöst werden können, wenn die Radfelge nicht zuvor von der Nabe demontiert worden ist.

Mithin liegt der Erfindung die Aufgabe zugrunde, die Kopplungsvorrichtung der eingangs genannten Art derart weiterzubilden, daß die Kopplung zwischen der Nabe und der Bremsscheibe auf einfache Weise gelöst werden kann, und zwar bevorzugt auch ohne vorherige Demontage des Rades von der Nabe.

Aus der FR-A-2 539 198 ist eine Scheibenbremse bekannt, bei der die Bremsscheibe mit der Nabe einerseits in Axialrichtung und andererseits in Drehrichtung gekoppelt ist. Zur Kopplung in Drehrichtung dient dabei ein zwischen der Drehscheibe und der Nabe liegender Zwischenring, in den zur drehfesten Kopplung mit der Nabe die Nabe außermittig durchsetzende Schrauben eingeschraubt sind. Zur Drehkopplung mit der Bremsscheibe dienen ebenfalls außermittig liegende Stifte, die in entsprechende Ausnehmungen in einem Bremsscheibenflansch einerseits und in dem Zwischenring andererseits angeordnet sind. Zur axialen Kopplung von Bremsscheibe und Nabe dient eine axialzentrierte Verschraubung, die den Bremsscheibenflansch und die Nabe in Axialrichtung miteinander verspannt.

Erfindungsgemäß wird die gestellte Aufgabe dadurch gelöst, daß das erste Koppelelement mit der Bremsscheibe verbunden ist und ein zu der Achse konzentrisches Gewindesegment trägt und ein zweites Koppelelement mit einem dem Gewindesegment komplementären Gewinde vorgesehen ist, das zum Verschrauben mit dem freien Ende des ersten Koppelelements ausgelegt ist.

Mit anderen Worten werden die nach dem Stand der Technik vorgesehenen Befestigungsschrauben durch ein oder mehrere mit der Bremsscheibe verbundene Gewindesegmente ersetzt, die - selbst wenn sie an verschiedenen Stellen eines gedachten Kreises um die Achse angeordnet sind - alle mit einem einzigen Gewinde kämmen, das an dem zweiten Koppelelement ausgebildet ist. Dadurch genügt zum Trennen der Nabe von der Bremsscheibe das Lösen einer einzigen Verschraubung, nämlich der Verschraubung des zweiten Koppelelements mit dem einen oder mehreren Gewindesegmenten. Ein Abbau des Rades bzw. der Radfelge von der Nabe ist zum Lösen der Kopplung zwischen der Nabe und der Bremsscheibe nicht erforderlich.

An dieser Stelle sei ausdrücklich darauf hingewiesen, daß die oben erwähnte Achse sowohl eine nicht drehende als auch eine drehende Achse sein kann, wobei die drehende Achse auch zur Übertragung eines Drehmoments (Welle) dienen kann.

Zur Vereinfachung der Konstruktion und zur Reduzierung der Zahl der Einzelteile ist es erfindungsgemäß bevorzugt, daß das erste Koppelelement von einem einstückig mit der Bremsscheibe ausgeführten Koppelansatz gebildet ist.

Bevorzugt steht das Gewinde des zweiten Koppelelements in aufgeschraubtem Zustand an drei Punkten mit Gewindesegment in Kontakt, die auf einem Kreis um die Achse einen Winkel von mehr als 180 ° einschließen. Bei dieser Konstruktion halten das oder die Gewindesegment(e) und das zweite Koppelsegment einander gegenseitig. Es wird ausdrücklich darauf hingewiesen, daß insbesondere diese Ausgestaltung sowohl ein einziges Gewindesegment, das sich über mehr als 180 ° erstreckt, als auch zwei oder mehr Gewindesegmente beinhaltet, die sich zusammen - mit Unterbrechungen - über mehr als 180 ° erstrecken.

Das erste Koppelelement kann sich durch eine zentrale Durchgangsöffnung der Nabe erstrecken, beispielsweise in Ringform. Dabei liegt es zwischen der Innenfläche der genannten zentralen Durchgangsöffnung der Nabe und der Achse bzw. einer an der Achse vorgesehenen Lagerung. Nach einem Ausführungsbeispiel der Erfindung ist es allerdings vorgesehen, daß die Durchgangsöffnung nicht von der Achse durchsetzt ist. Mit anderen Worten handelt es sich bei der Durchgangsöffnung um eine zusätzlich zu der genannten zentralen Durchgangsöffnung in der Nabe vorgesehene Durchgangsöffnung.

Die Erfindung betrifft weiter eine Vorrichtung zur drehfesten Kopplung einer an einer Achse gehaltenen Nabe mit einer Bremsscheibe einer Scheibenbremse, wobei die Bremsscheibe auf der dem freien Ende der Achse abgewandten Seite der Nabe liegt und die Nabe dazu ausgelegt ist, mittels einer Halteeinrichtung eine Felge zu halten, mit mindestens zwei unabhängig von der Halteeinrichtung lösbaren Koppelelementen, die sich jeweils durch eine Durchgangsöffnung in der Nabe erstrecken.

Eine solche Vorrichtung ist beispielsweise aus der DE-A-3 446 437 und der US-A-3 495 689 bekannt. Bei den bekannten Vorrichtungen dient jeweils die Halteeinrichtung zum Halten der Felge an der Nabe auch gleichzeitig der drehfesten Kopplung der Nabe mit einer Bremsscheibe.

Eine vergleichbare Vorrichtung ist ferner aus der EP-A-703 130 bekannt, die der DE-A-44 33 743 entspricht.

Nach dieser weiteren Ausgestaltung der Erfindung wird die gestellte Aufgabe dadurch gelöst, daß die Durchgangsöffnungen derart angeordnet sind, daß die Koppelelemente auch bei angebrachter Felge vom freien Ende der Achse her zugänglich sind.

Zwar genügt nach dieser Ausgestaltung der Erfindung nicht das Lösen eines einzigen Koppelelements, die Kopplungsvorrichtung ist aber dennoch insofern gegenüber der bekannten Kopplungsvorrichtung vereinfacht, daß die Nabe von der Bremsscheibe gelöst werden kann, ohne daß ein Abbau des Rades bzw. der Radfelge von der Nabe erforderlich wäre. Da nämlich die Koppelelemente auch bei angebrachter Felge vom freien Ende der Achse her zugänglich sind, können die Koppelelemente ohne einen Abbau der Felge von der Nabe gelöst werden, woraufhin die Nabe mitsamt der Felge von der Bremsscheibe abgenommen werden kann.

Eine bevorzugte Ausgestaltung sieht vor, daß die Koppelelemente Schrauben sind und die Bremsscheibe Bohrungen mit zu den Schrauben passenden Innengewinden aufweist. Dadurch ergibt sich ein besonders einfacher An- und Abbau, wobei jedoch gleichzeitig eine feste Verbindung zwischen der Nabe und der Bremsscheibe gewährleistet ist.

Nach einer weiter bevorzugten Ausführungsform sind die Durchgangsöffnungen in einem Nabenflansch angeordnet, der auf der der Bremsscheibe abgewandten Seite einen Flanschdeckel trägt, wobei die Koppelelemente den Flanschdeckel, die Nabe und die Bremsscheibe miteinander koppeln. Ein solcher Flanschdeckel dient gleichzeitig der besseren Verspannung und der besseren Abdichtung des Achsstummels 1.

Zur Sicherung gegen eine gegenseitiges Verdrehen von Nabe und Bremsscheibe ist weiter eine Profilierung an der Nabe und/oder an der Bremsscheibe in einem Bereich bevorzugt, in dem die Bremsscheibe und die Nabe durch die Verschraubung gegeneinander gedrückt werden.

Zusätzlich oder alternativ kann erfindungsgemäß ein sich von der Nabe in Richtung auf die Bremsscheibe erstreckender Sperransatz vorgesehen sein, der dazu ausgelegt ist, derart an einem Anschlag an der Bremsscheibe anzuliegen, daß die Bremsscheibe und die Nabe gegen ein Verdrehen gegeneinander gesperrt sind.

Der Sperransatz kann dabei von einer Schraube gebildet sein, die zum Befestigen eines Rades an der Nabe dient, wobei insbesondere in diesem Fall der Anschlag von einer Begrenzungswand einer Ausnehmung an der Bremsscheibe gebildet sein kann, in die der Sperransatz aufgenommen ist.

Nachstehend ist die Erfindung anhand mehrerer bevorzugter Ausführungsbeispiele unter Bezugnahme auf die beiliegende Zeichung mit weiteren Einzelheiten näher erläutert.

Dabei zeigen
Fig. 1 eine Axialschnittansicht eines ersten Ausführungsbeispiels der erfindungsgemäßen Koppelvorrichtung,
Fig. 2 die gleiche Ansicht wie Fig. 1, jedoch von einem zweiten Ausführungsbeispiel,
Fig. 3 schematisch eine perspektivische Ansicht der Bremsscheibe,
Fig. 4 die gleiche Ansicht wie Fig. 1, jedoch von einem dritten Ausführungsbeispiel,

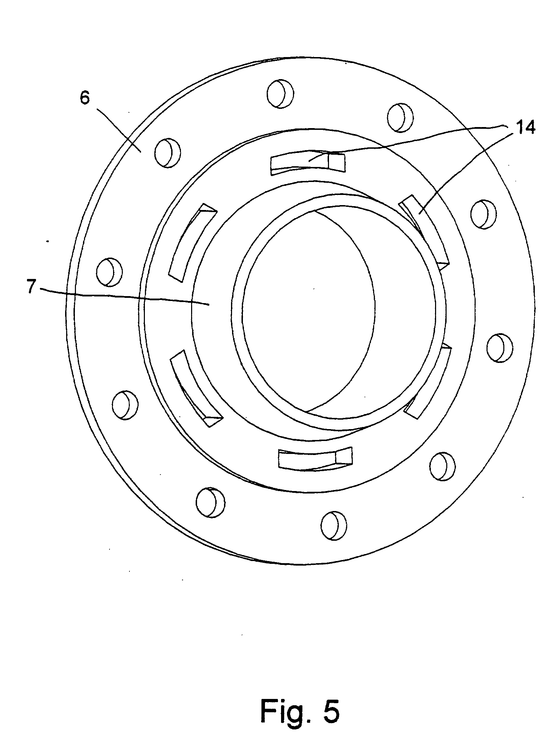

Fig. 5 eine perspektivische Ansicht der Nabe und
Fig. 6 eine Axialschnittansicht eines vierten Ausführungsbeispiels der Erfindung.

Im Bereich eines Endabschnitts 1 einer (in den dargestellten Ausführungsbeispielen nicht drehenden) Achse ist eine Scheibenbremse 2 angeordnet, die mit zwei Sattelschenkeln eine Bremsscheibe 3 übergreift. Die Bremsscheibe 3 weist auf ihrer einer Radnabe 5 zugewandten Seite einen Scheibenflansch 4 auf, dessen Stirnfläche an der Stirnfläche eines Nabenflansches 6 anliegt. Der Zentrierung von Bremsscheibe 3 und Nabe 5 dient ein Zentrierbereich 7. Die Radnabe 5 ist auf dem Endabschnitt 1 der Achse mittels einer Lagerung 8 drehbar gelagert. Zur axialen Festlegung dienen dabei Achsansätze sowie am Achsende eine Axialsicherung 9. Zur Festlegung eines eine Radfelge 10 und einen Reifen (nicht dargestellt) aufweisenden Rades am Nabenflansch 6 dienen Schraubverbindungen 11.

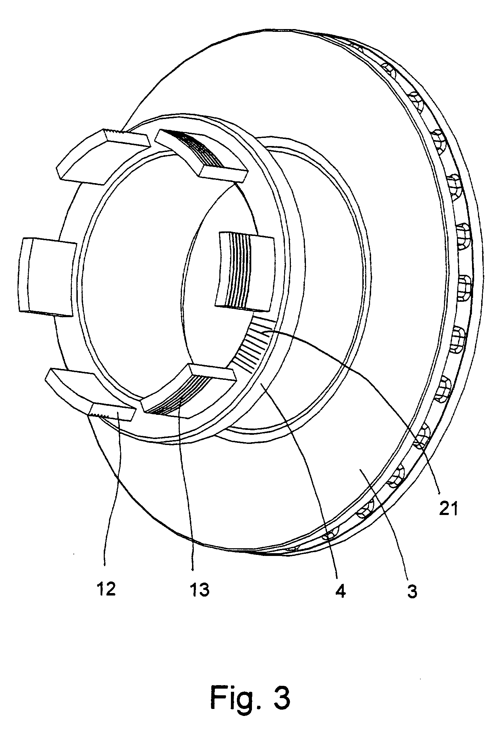

An der der Stirnfläche des Nabenflansches 6 zugewandten Stirnfläche des Scheibenflansches 4 sind an dem Scheibenflansch 4 sich in Axialrichtung erstreckende Ansätze 12 ausgebildet, vgl. auch Fig. 3. Der Nabenflansch 6 weist Durchgangsöffnungen 14 auf, durch die sich die Ansätze 12 erstrecken. Die Ansätze 12 tragen Gewindesegmente 13, die bei den dargestellten Ausführungsbeispielen als Außengewinde ausgebildet sind. Ein den Gewindesegmenten 13 komplementäres Gewinde 16 auf einer Zentralverschraubung 15 ist daher als Innengewinde ausgestaltet.

Denkbar ist auch, daß die Ansätze 12 Segmente eines Innengewindes tragen, wohingegen dann die Zentralverschraubung 15 ein Außengewinde trägt.

Um den Kraftschluß in Drehrichtung zwischen dem Scheibenflansch 4 und dem Nabenflansch 6 zu verbessern, sind bei den dargestellten Ausführungsbeispielen an den durch die Verschraubung gegeneinander verspannbaren Stirnflächen des Scheibenflansches 4 einerseits und des Nabenflansches 6 andererseits Profilierungen vorgesehen, die die Form von Nuten/Ausnehmungen und/oder Zähnen 21 haben, wobei Profilierungen auf der einen Stirnseite in komplementärer Form auf der anderen Stirnseite zu finden sind. Dabei sind die Nuten/Ausnehmungen oder Zähne im wesentlichen radial verlaufend ausgebildet. Dadurch werden die Ansätze 12 von Umfangskräften entlastet. Selbstverständlich können zusätzlich oder alternativ auch axial verlaufende Nuten/Ausnehmungen oder Zähne vorgesehen sein.

In einfacher Weise läßt sich die genannte Entlastung auch dadurch realisieren, daß am Außenumfang des Scheibenflansches 4 eine (in den Zeichnungen nicht dargestellte) Ausnehmung ausgebildet ist, die den Kopf einer der Befestigung der Radfelge 10 an dem Nabenflansch 6 dienende Schraube 11 umgreift.

Die Bremsscheibe 3 weist einen Stützbereich 17 auf, der nach radial innen bis kurz vor die Achse reicht. Dieser Stützbereich 17 wirkt sich bei der Trennung der Radnabe 5 von der Bremsscheibe 3 insoweit vorteilhaft aus, als die Bremsscheibe 3 ihre Lage gegenüber einem an der Nabe 5 ausgebildeten Zentrierbereich 7 nicht wesentlich verändert und sich bei einem anschließenden Zusammenbau unter Verwendung der Zentralverschraubung 15 wieder in den Zentrierbereich 7 aufzieht.

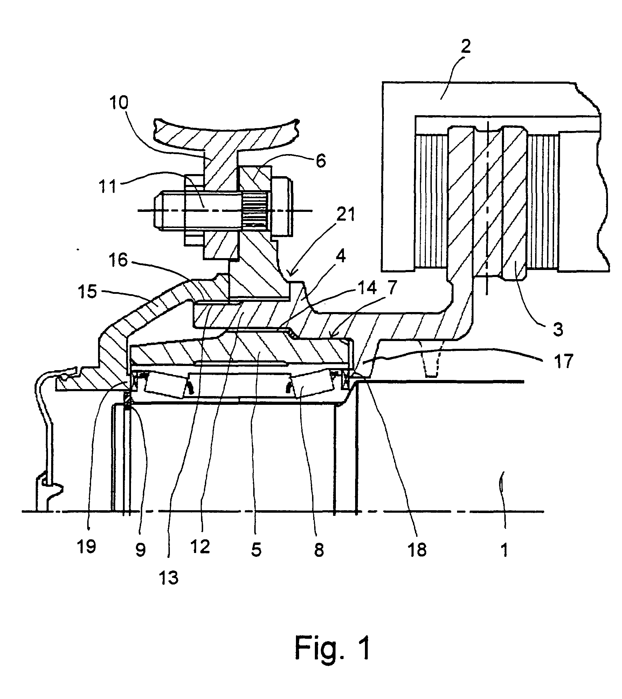

Wie insbesondere die Figur 1 zeigt, kann nach Entfernung der Zentralverschraubung 15 von den Ansätzen 12 sofort die Radnabe 5 mit der daran befestigten Radfelge 10 von der Bremsscheibe 3 getrennt und von dem Endabschnitt 1 der Achse abgezogen werden. Die Lagerung 8 hingegen bleibt auf dem Endabschnitt 1 der Achse, weil sie durch die Axialsicherung 9 weiterhin gehalten ist. Zur Axialfixierung der Lagerung 8 im montierten Zustand dienen bei dem in Figur 1 gezeigten Ausführungsbeispiel Axialansätze 18, 19, die einerseits an der Bremsscheibe 3 und andererseits an der Zentralverschraubung 15 ausgebildet sind.

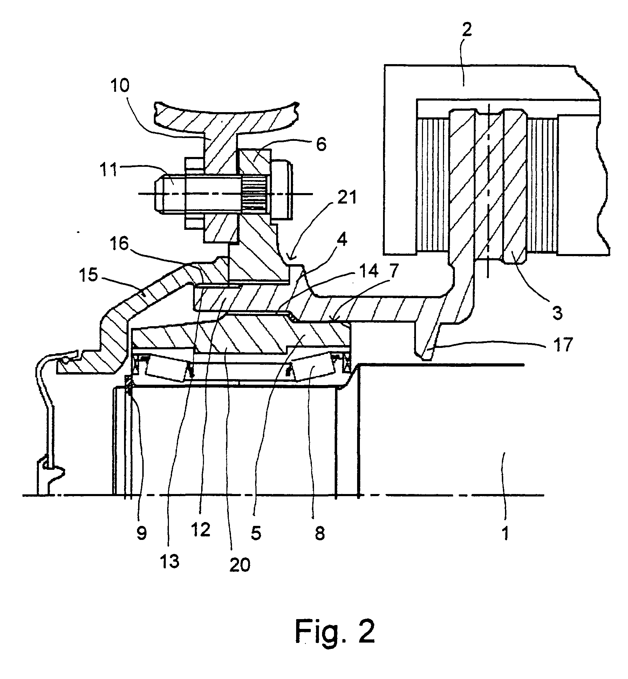

Bei dem Ausführungsbeispiel nach Figur 2 greift die Radnabe 5 mittels eines Radialansatzes 20 in den Bereich der Lagerung 8 ein, und die Lagerung 8 ist wie bei Figur 1 mit einer Axialsicherung 9 auf dem Endabschnitt 1 der Achse festgelegt. Wird bei dieser Ausführungsform die Zentralverschraubung 15 entfernt, so ist ein Abziehen der Radnabe 5 zusammen mit der Lagerung 8 nach vorausgegangener Entfernung der Axialsicherung 9 von dem Endabschnitt 1 der Achse möglich.

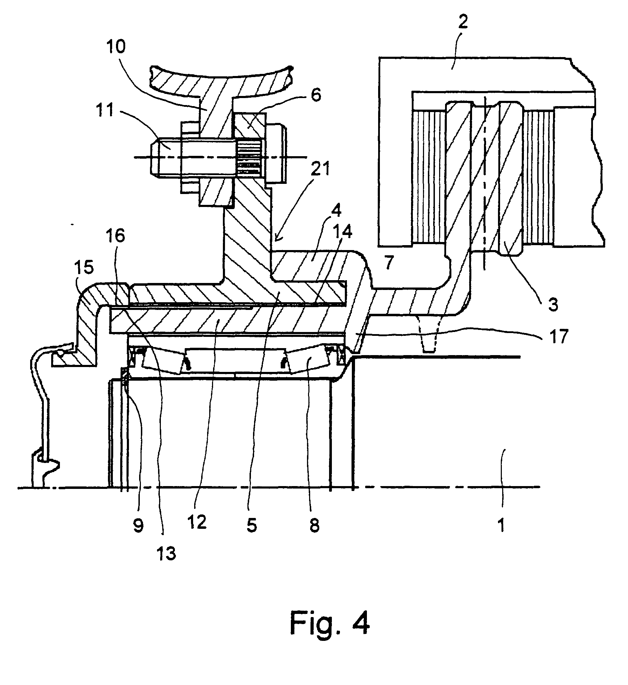

Bei dem in Fig. 4 gezeigten dritten Ausführungsbeispiel ist nur ein einziger Ansatz 12 vorgesehen. Dieser Ansatz 12 ist ringförmig und erstreckt sich zwischen der Lagerung 8 und der Nabe 5. Mit anderen Worten ist in einer einzigen zentralen Durchgangsöffnung 14 der Nabe sowohl der Ansatz 12 als auch die Lagerung 8 mit der Achse 1 untergebracht.

Wie auch bei dem Ausführungsbeispiel nach Fig. 2 kann bei diesem Ausführungsbeispiel die Nabe 5 nach Entfernung der Zentralverschraubung 15 und Entfernung der Axialsicherung 9 von dem Endabschnitt 1 der Achse abgezogen werden.

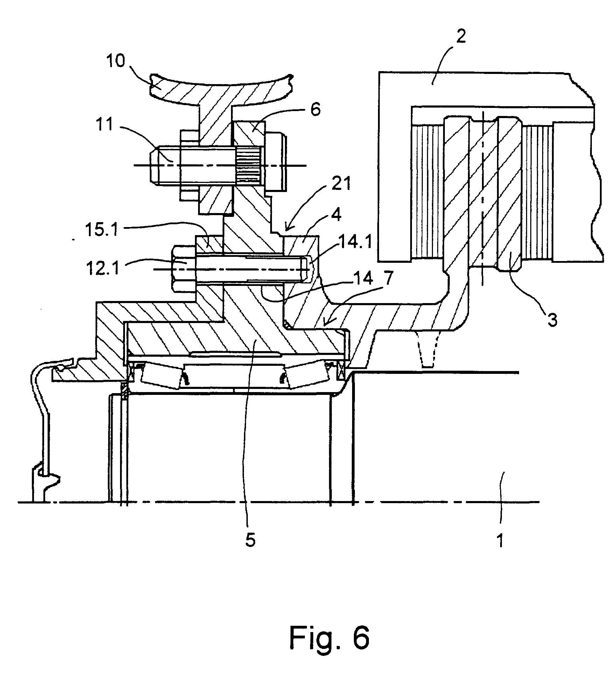

Bei dem in Fig. 6 gezeigten vierten Ausführungsbeispiel der Erfindung sind in der der Stirnfläche des Nabenflansches 6 zugewandten Stirnfläche des Scheibenflansches 4 mehrere Gewindelöcher 14.1 angeordnet, die mit den Durchgangsöffnungen 14 des Nabenflansches 4 fluchten. Zur Seite des Achsendes ist ein der besseren Verspannung einerseits und der besseren Abdichtung des Achsstummels 1 andererseits dienender Flanschdeckel 15.1 mit Durchgangsöffnungen vorhanden. Mit dem Bezugszeichen 12.1 bezeichnete Verschraubungen dienen der Kopplung der aus den Teilen Bremsscheibe 3, Nabe 5 und Flanschdeckel 15 bestehenden Einheit. Auch bei dieser Ausführung ist zur Entlastung der Verschraubungen 12.1 von Umfangskräften entweder im Bereich 21 oder im Bereich 7 ein Radial- und/oder Axialschluß zwischen dem Scheibenflansch 4 und der Nabe 5, 6 vorhanden.

Auch bei dieser Ausführungsform ist eine Trennung zwischen der Bremsscheibe 3 und der Radnabe 5 ohne Entfernen der Radfelge 10 realisierbar. Es müssen lediglich die Verschraubungen 12.1 gelöst werden.

### BEZUGSZEICHENLISTE

- 1: Endabschnitt der Achse
- 2: Scheibenbremse
- 3: Bremsscheibe
- 4: Scheibenflansch
- 5: Nabe
- 6: Nabenflansch
- 7: Zentrierbereich
- 8: Lagerung
- 9: Axialsicherung
- 10: Radfelge
- 11: Schraubverbindung
- 12: Ansatz
- 12.1: Verschraubung
- 13: Gewindesegment
- 14: Durchgangsöffnung
- 14.1: Gewindebohrung
- 15: Zentralverschraubung
- 15.1: Flanschdeckel
- 16: Gewinde
- 17: Stützbereich
- 18: Axialansatz
- 19: Axialansatz
- 20: Radialansatz
- 21: Profilierung

## Patentansprüche

1. Vorrichtung zur drehfesten Kopplung einer an einer Achse (1) gehaltenen Nabe (5) mit der Bremsscheibe (3) einer Scheibenbremse (2),
wobei die Bremsscheibe (3) auf der dem freien Ende der Achse (1) abgewandten Seite der Nabe (5) liegt,
mit mindestens einem der drehfesten Kopplung dienenden ersten Koppelelement (12), das sich durch eine Durchgangsöffnung (14) in der Nabe (5) erstreckt,
dadurch gekennzeichnet, daß
das erste Koppelelement (12) mit der Bremsscheibe (3) verbunden ist und ein zu der Achse (1) konzentrisches Gewindesegment (13) trägt und
ein zweites Koppelelement (15) mit einem dem Gewindesegment (13) komplementären Gewinde (16) vorgesehen ist, das zum Verschrauben mit dem freien Ende des ersten Koppelelements (12) ausgelegt ist.

2. Vorrichtung nach Anspruch 1, dadurch gekennzeichnet, daß das erste Koppelelement (12) von einem einstückig mit der Bremsscheibe (3) ausgeführten Koppelansatz gebildet ist.

3. Vorrichtung nach Anspruch 1 oder 2, dadurch gekennzeichnet, daß das Gewinde (16) des zweiten Koppelelements (15) in aufgeschraubtem Zustand an drei Punkten mit Gewindesegment (13) in Kontakt steht, die auf einem Kreis um die Achse (1) einen Winkel von mehr als 180° einschließen.

4. Vorrichtung nach einem der vorangehenden Ansprüche, dadurch gekennzeichnet, daß die Durchgangsöffnung (14) nicht von der Achse (1) durchsetzt ist.

5. Vorrichtung zur drehfesten Kopplung einer an einer Achse (1) gehaltenen Nabe (5) mit einer Bremsscheibe (3) einer Scheibenbremse (2),
wobei die Bremsscheibe (3) auf der dem freien Ende der Achse (1) abgewandten Seite der Nabe (5) liegt und
die Nabe (5) dazu ausgelegt ist, mittels einer Halteeinrichtung (11) eine Felge (10) zu halten,
mit mindestens zwei unabhängig von der Halteeinrichtung (11) lösbaren Koppelelementen (12.1), die sich jeweils durch eine Durchgangsöffnung (14.1) in der Nabe (5) erstrecken,
dadurch gekennzeichnet, daß
die Durchgangsöffnungen (14.1) derart angeordnet sind, daß die Koppelelemente (12.1) auch bei angebrachter Felge (10) vom freien Ende der Achse (1) her zugänglich sind.

6. Vorrichtung nach Anspruch 5, dadurch gekennzeichnet, daß die Koppelelemente (12.1) Schrauben sind, und die Bremsscheibe (3, 4) Bohrungen (14.1) mit zu den Schrauben passenden Innengewinden aufweist.

7. Vorrichtung nach Anspruch 5 oder 6, dadurch gekennzeichnet, daß die Durchgangsöffnungen (14.1) in einem Nabenflansch (6) angeordnet sind, der auf der der Bremsscheibe (3) abgewandten Seite einen Flanschdeckel (15.1) trägt, wobei die Koppelelemente (14.1) den Flanschdeckel (15.1), die Nabe (5, 6) und die Bremsscheibe (3, 4) miteinander koppeln.

8. Vorrichtung nach einem der vorangehenden Ansprüche, gekennzeichnet durch eine Profilierung (21) an der Nabe (5) und/oder an der Bremsscheibe (3) in einem Bereich, in dem die Bremsscheibe (3) und die Nabe (5) durch die Verschraubung gegeneinander gedrückt werden.

9. Vorrichtung nach einem der vorangehenden Ansprüche, gekennzeichnet durch einen sich von der Nabe (5) in Richtung auf die Bremsscheibe (3) erstreckenden Sperransatz, der dazu ausgelegt ist, derart an einem Anschlag an der Bremsscheibe (3) anzuliegen, daß die Bremsscheibe (3) und die Nabe (5) gegen ein Verdrehen gegeneinander gesperrt sind.

10. Vorrichtung nach Anspruch 9, dadurch gekennzeichnet, daß
der Sperransatz von einer Schraube (11) gebildet ist, die zum Befestigen eines Rades (10) an der Nabe (5) dient und
der Anschlag von einer Begrenzungswand einer Ausnehmung an der Bremsscheibe (3, 4) gebildet ist, in die der Sperransatz aufgenommen ist.

## Claims

1. Device to rigidly mount the brake rotor (3) for a disk brake (2) to the hub (5) of an axle (1),
whereby the brake rotor (3) is positioned on the hub (5) opposite the axle (1) shaft, with a minimum of one rigid initial coupling element (12) reaching through an opening (14) of the hub (5),
characterized by:
the first coupling element (12) fixed to the brake rotor (3) being equipped with a concentric thread segment (13) on the axle (1) side and
the thread segment of the second coupling element (15) having been equipped with additional threads (16) to facilitate mounting to the free end of the first coupling element (12).

2. Device according to claim 1, characterized by the first coupling element (12) being integrated into the brake rotor (3) as a single unit.

3. Device according to claims 1 or 2, characterized by the threads (16) of the second coupling element (15) contacting the thread segment (13) on 3 points in a circle around the axle (1), encompassing an angle of more than 180°.

4. Device according to one of the above claims, characterized by the thru opening (14) not being penetrated by the axle (1).

5. Device to rigidly mount the hub (5) of an axle (1) to the brake rotor (3) of a disk brake (2), whereby the brake rotor (3) is positioned on the open end of the axle (1) and the hub (5), via a mounting fixture (11), is designed to accept a wheel (10), with a minimum of two coupling elements (12.1), independent of the mounting fixture (11), each reaching through an opening (14.1) of the hub (5),
characterized by
the thru openings (14.1) being located so that the coupling elements (12.1) are accessible from the open end of axle (1) even when a wheel (10) has been mounted.

6. Device according to claim 5, characterized by the coupling elements (12.1) being screws and the brake rotor (3, 4) having been equipped with holes having intemal threads (14.1) to accommodate the screws.

7. Device according to claims 5 or 6, characterized by the thru openings (14.1) being integrated into a hub flange (6) which on the opposite side of the brake rotor (3) is equipped with a flange cover (15.1) whereby the coupling elements (14.1) connect the flange cover (15.1), the hub (5, 6) and the brake rotor (3, 4) with each other.

8. Device according to one of the above claims, characterized by the shaped contour (21) on the hub (5) and / or the brake rotor (3) in an area where the brake rotor (3) and the hub (5) are pressed against each other via the bolted joint.

9. Devise according to one of the above claims, characterized by a locking step, from the hub (5) towards the brake rotor (3), designed to prevent any axial movement by locking brake rotor (3) and hub (5) together.

10. Device according to claim 9, characterized by the locking step being a screw (11) which also serves to mount the wheel (10) to the hub and
where the abutment forms a limiting wall in a recess of the brake rotor (3, 4) in which the locking step has been incorporated.

## Revendications

1. Dispositif destiné au couplage en rotation d'un moyeu (5) fixé sur un essieu (1) avec le disque de frein (3) d'un frein à disque (2),
le disque de frein (3) étant placé à l'opposé de l'extrémité libre de l'essieu (1) par rapport au moyeu (5),
avec au moins un élément de liaison (12) destiné au couplage en rotation qui s'étend dans le moyeu (5) à travers une ouverture de passage (14),
caractérisé en ce que
le premier élément de liaison (12) est relié au disque de frein (3) et porte un segment fileté (13) concentrique à l'essieu (1) et que
un second élément de liaison (15) dispose d'un filetage (16) complémentaire au segment fileté (13), lequel filetage est conçu pour se visser sur l'extrémité libre du premier élément de liaison (12).

2. Dispositif selon la revendication 1, caractérisé en ce que le premier élément de liaison (12) est constitué d'un appendice de couplage formant avec le disque de frein (3) une seule pièce.

3. Dispositif selon l'une des revendications 1 ou 2, caractérisé en ce que le filetage (16) du second élément de liaison (15) est, dans sa position vissée, en contact sur trois points avec le segment fileté (13), lesquels points forment un angle de plus de 180° le long d'un cercle autour de l'essieu (1).

4. Dispositif selon l'une quelconque des revendications précédentes, caractérisé en ce que l'ouverture de passage (14) n'est pas traversée par l'essieu (1).

5. Dispositif destiné au couplage en rotation d'un moyeu (5) fixé sur un essieu (1) avec un disque de frein (3) d'un frein à disque (2),
le disque de frein (3) étant placé à l'opposé de l'extrémité libre de l'essieu (1) par rapport au moyeu (5) et
le moyeu (5) étant conçu de telle sorte qu'il supporte une jante (10) au moyen d'un dispositif de retenue (11),
avec au moins deux éléments de liaison (12.1) démontables indépendamment du dispositif de retenue (11) qui s'étendent chacun dans le moyeu (5) à travers une ouverture de passage (14.1),
caractérisé en ce que
les ouvertures de passage (14.1) sont disposées de telle sorte que les éléments de liaison (12.1) sont accessibles depuis l'extrémité libre du corps d'essieu (1) même lorsque la jante (10) est montée.

6. Dispositif selon la revendication 5, caractérisé en ce que les éléments de liaison (12.1) sont des vis et que le disque de frein (3, 4) dispose de taraudages (14.1) avec un filetage correspondant à celui des vis.

7. Dispositif selon l'une des revendications 5 ou 6, caractérisé en ce que les ouvertures de passage (14.1) sont agencées dans un collet du moyeu (6) qui supporte du côté opposé au disque de frein (3) une bride d'obturation (15.1), les éléments de liaison (14.1) reliant ensemble la bride d'obturation (15.1), le moyeu (5, 6) et le disque de frein (3,4).

8. Dispositif selon l'une quelconque des revendications précédentes, caractérisé par un profilage (21) sur le moyeu (5) et/ou le disque de frein (3) dans une zone où le disque de frein (3) et le moyeu (5) sont serrés l'un contre l'autre par le vissage.

9. Dispositif selon l'une quelconque des revendications précédentes, caractérisé par un appendice de blocage s'étendant du moyeu (5) en direction du disque de frein (3), lequel appendice est conçu pour s'appuyer sur une butée sur le disque de frein (3) de telle sorte que le disque de frein (3) et le moyeu (5) sont bloqués en rotation l'un par rapport à l'autre.

10. Dispositif selon la revendication 9, caractérisé en ce que
l'appendice de blocage est constitué d'une vis (11) qui sert à fixer une roue (10) sur le moyeu (5) et que
la butée est formée par la périphérie d'un évidement sur le disque de frein (3, 4) dans lequel se loge l'appendice de blocage.
